# EUROPÄISCHE PATENTSCHRIFT

(11) **EP 1 395 836 B1**
(45) Veröffentlichungstag und Bekanntmachung des Hinweises auf die Patenterteilung: **26.11.2008**
(21) Anmeldenummer: 02735340.8
(22) Anmeldetag: 07.05.2002
(51) Int. Cl.: G01P 15/08, G01P 15/16

(54) **FERRARIS-SENSOR**
FERRARIS SENSOR
CAPTEUR DE TYPE FERRARIS

(30) Priorität: 23.05.2001 DE 10125097
(43) Veröffentlichungstag der Anmeldung: 10.03.2004
(73) Patentinhaber: Dr. Johannes Heidenhain GmbH, 83292 Traunreut (DE)
(72) Erfinder: SCHWABE, Michael, 83093 Bad Endorf-Hemhof (DE); SCHMIDT, Ralph, 71394 Kernen i.R. (DE); RISSING, Lutz, 83358 Seebruck (DE)
(86) Internationale Anmeldenummer: PCT/EP2002/004992
(87) Internationale Veröffentlichungsnummer: WO 2002/095422

(56) Entgegenhaltungen:
- EP-A- 0 886 145
- WO-A-02/12904
- FR-A- 1 449 316
- US-A- 2 460 115
- ALLAN R: "COIL-BASED MICROMACHINED SENSOR MEASURES SPEED AND POSITION FOR AUTOMOTIVE APPLICATIONS" ELECTRONIC DESIGN, PENTON PUBLISHING, CLEVELAND, OH, US, Bd. 44, Nr. 26, 16. Dezember 1996 (1996-12-16), Seiten 34-35,37, XP000682027 ISSN: 0013-4872
- PATENT ABSTRACTS OF JAPAN vol. 011, no. 058 (P-550), 21. Februar 1987 (1987-02-21) -& JP 61 223564 A (MITSUI PETROCHEM IND LTD), 4. Oktober 1986 (1986-10-04) in der Anmeldung erwähnt

## Beschreibung

Die Erfindung betrifft einen Ferraris-Sensor nach dem Oberbegriff des Anspruches 1.

Geschwindigkeits- oder Beschleunigungssensoren, die auf dem Prinzip der Wirbelstrommessung beruhen, werden auch Ferraris-Sensoren genannt. Äußere Magnetfelder erzeugen in einem bewegten, elektrisch leitenden, nicht ferromagnetischen Körper Wirbelströme , deren Stärke abhängig von der relativen Geschwindigkeit zwischen äußerem Magnetfeld und bewegtem Körper ist. Mit diesen Wirbelströmen sind innere Magnetfelder verknüpft, die den äußeren Magnetfeldern überlagert sind. Detektiert man die Größe dieser inneren Magnetfelder, etwa mittels Hall-Sensoren, erhält man ein Signal, daß zur Geschwindigkeit des bewegten Körpers proportional ist.

Beschleunigungen, also Geschwindigkeitsänderungen des bewegten Körpers, verändern das mit den Wirbelströmen verknüpfte innere Magnetfeld, wodurch in Detektorspulen Spannungen induziert werden, die proportional zur Beschleunigung sind.

Nach dem Ferraris-Prinzip arbeitende Detektoren erlauben also die direkte Messung einer Geschwindigkeit oder einer Beschleunigung.

Aus der DE 37 30 841 A1 ist ein derartiger Wirbelstrom-Detektor bekannt, der als Tachometer oder Beschleunigungsmesser benutzt werden kann. Dieser enthält einen nicht magnetischen, elektrisch leitfähigen Körper, dessen Geschwindigkeit oder Geschwindigkeitsänderung gemessen werden soll. Ein konstantes Magnetfeld wird im wesentlichen senkrecht zur Bewegungsrichtung erzeugt und führt zu Wirbelströmen im bewegten Körper, die ihrerseits ein Wirbelstrom-Magnetfeld verursachen. Bei einer Realisierung als Tachometer wird die Flußdichte des Wirbelstromfeldes mit einem Halleffekt-Sensor gemessen, dessen Ausgangssignal proportional zur Geschwindigkeit ist. Bei einer Realisierung als Beschleunigungsmesser wird die zeitliche Änderung der Flußdichte des Wirbelstromfeldes mit einer Spule gemessen, deren Ausgangsspannung proportional zur Beschleunigung ist.

Nachteilig ist der große Platzbedarf, der durch die Verwendung einer umgreifenden Jochstruktur entsteht. Zusätzlich verhindert das Joch auch den Einsatz des Sensors für Messungen an einem in einer Ebene frei verschiebbaren Körper, da durch das Joch eine Richtung zumindest eingeschränkt wird.

In der JP 61223564 wird ein Wirbelstrom-Detektor vorgeschlagen, der auf ein umgreifendes Joch verzichtet. Mittels zweier Spulen, die gegensinnig von Gleichstrom durchflossen sind, werden drei Magnetpole erzeugt, von denen aus ein äußeres Magnetfeld eine Wirbelstromscheibe durchsetzt. Die Magnetpole sind dabei in Richtung der zu erfassenden Bewegung hintereinander angeordnet. Die Anordnung der Detektorspulen erlaubt aber keine optimale Erfassung der erzeugten Wirbelströme, somit erhält man keine guten Signale.

Die Schrift US-A-2 460 115 zeigt einen Ferraris-Beschleunigungssensor mit einem flächigen Wirbelstromkörper und einem auf einer Seite des Wirbelstromkörpers angeordneten Abtastkopf, bei dem abwechselnd in Richtung der zu messenden Beschleunigung Detektorspulen, deren Achsen senkrecht zur Oberfläche des Wirbelstromkörpers stehen, und Magneten angeordnet sind.

Die Schrift FR-A-1 449 316 zeigt einen Ferraris-Beschleunigungssensor mit flächigem Wirbelstromkörper, bei dem der Abtastkopf vollständig auf einer Seite des Wirbelstromkörpers angebracht ist.

Die Schrift ALLAN R: "COIL-BASED MICROMACHINED SENSOR MEASURES SPEED AND POSITION FOR AUTOMOTIVE APPLICATIONS" , XP000682027, ISSN: 0013-4872 zeigt eine Anordnung von spiralförmigen Detektorspulen auf einer Leiterplatte.

Aufgabe der Erfindung ist es, einen Ferraris-Sensor anzugeben, der kompakt aufgebaut ist und möglichst gute Signale liefert.

Diese Aufgabe wird gelöst durch eine Vorrichtung mit den Merkmalen des Anspruches 1. Vorteilhafte Ausführungsformen ergeben sich aus den Merkmalen, die in den von Anspruch 1 abhängigen Ansprüchen aufgeführt sind.

Nunmehr werden in einem Abtastkopf eines Ferraris-Sensors die Detektorspulen zur Detektion eines mit den Wirbelströmen verknüpften inneren Magnetfeldes zwischen bzw. neben den zur Erzeugung eines äußeren Magnetfeldes verwendeten Permanentmagneten angebracht. Magnete und Detektorspulen werden dabei lediglich auf einer Seite eines flächigen Wirbelstromkörpers und abwechselnd nebeneinander in Richtung der zu messenden Beschleunigung angeordnet. Auf ein umgreifendes Joch wird verzichtet, was zu einem kompakten Aufbau des Sensors führt. Um dennoch optimale Signale zu bekommen, werden die Detektorspulen mit ihrer Spulenachse senkrecht zur Oberfläche des Wirbelstromkörpers angeordnet. Die optimale Erfassung des inneren Magnetfeldes wird so ermöglicht, da sich die Achsen der Detektorspulen annähernd mit den Rotationsachsen der Wirbelströme decken. In der beanspruchten Ausführungsform kommen Detektorspulen ohne Eisenkern zum Einsatz, da dies die Detektion der Beschleunigung mit hoher Zeitauflösung erlaubt. Darin sind die Detektorspulen durch Leiterbahnen auf einer Platine ausgebildet. Dies führt zu einer weiteren Miniaturisierung des Abtastkopfes im Ferraris-Sensor.

Weitere Vorteile sowie Einzelheiten der vorliegenden Erfindung ergeben sich aus der nachfolgenden Beschreibung verschiedener Ausbildungen von Ferraris-Sensoren anhand der Figuren. Dabei zeigt
- Figur 1: einen nicht den Erfindungsgegenstand repräsentierenden Ferraris-Sensor in einer Seitenansicht
- Figur 2: den Ferraris-Sensor aus Fig. 1 in einer Daraufsicht
- Figur 3: einen weiteren Ferraris-Sensor mit Gegenstruktur
- Figur 4: eine Leiterplatte mit Detektorspulen gemäß der beanspruchten Erfindung
- Figur 5: einen Ferraris-Sensor mit Detektorspulen nach Fig. 4

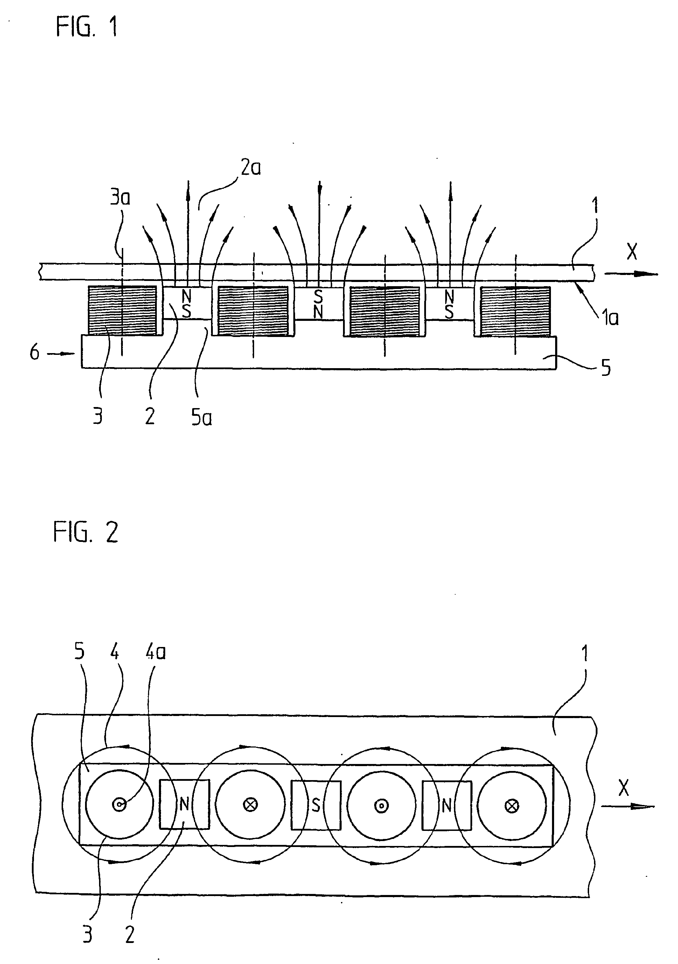

Figur 1 zeigt in einer Seitenansicht einen Ferraris-Sensor zur Messung von Beschleunigungen eines bewegten Objektes. Ein flächiger Wirbelstromkörper 1 ist dabei entweder am bewegten Objekt befestigt, oder das bewegte Objekt selbst eignet sich als Wirbelstromkörper 1. Das Material des Wirbelstromkörpers 1 muß elektrisch leitend und sollte nicht magnetisch sein. Kupfer und Aluminium sind Beispiele für geeignete Materialien. Ein Abtastkopf 6 ist so aufgebaut, daß er ausschließlich auf einer Seite des Wirbelstromkörpers 1 angeordnet ist. Natürlich kann auch der Abtastkopf 6 am bewegten Objekt befestigt sein und einem ortsfesten Wirbelstromkörper gegenüber liegen.

In Figur 1 erkennt man weiter drei Magnete 2, die in abwechselnder magnetischer Ausrichtung entlang der zu erfassenden Beschleunigung in Richtung X angeordnet sind. Da der Abstand zwischen den Magneten 2 und dem Wirbelstromkörper 1 möglichst klein (ca. 0,5mm oder weniger) gehalten wird, durchsetzt das äußere Magnetfeld 2a die Oberfläche 1 a des Wirbelstromkörpers 1 annähernd senkrecht. Neben den Magneten 2 erkennt man vier Detektorspulen 3, deren Spulenachsen 3a ebenfalls senkrecht zur Oberfläche 1a des Wirbelstromkörpers 1 stehen. Solche Anordnungen mit drei Magneten 2 und vier Detektorspulen 3 haben sich in der Praxis als besonders vorteilhafter Kompromiß zwischen Baugröße und Signalstärke erwiesen. Es sind jedoch Anordnungen mit anderen Magnet- und Detektorspulenzahlen möglich. In jedem Fall werden aber Magnete 2 und Detektorspulen 3 abwechselnd in einer Richtung X der zu messenden Beschleunigung angeordnet. Der dem Wirbelstromkörper 1 zugewandte magnetische Pol wechselt dabei jeweils von einem Magnet 2 zum nächsten Magnet 2.

Figur 2 zeigt die Anordnung aus Figur 1 in Daraufsicht. Durch die Bewegung zwischen Abtastkopf 6 und Wirbelstromkörper 1 werden Wirbelströme 4 erzeugt. Die Wirbelströme 4 sind in Figur 2 vereinfachend kreisförmig dargestellt. In Bewegungsrichtung X hinter einem Nordpol eines Magneten 2 entsteht also ein Wirbelstrom 4, der das äußere Magnetfeld 2a durch ein inneres Magnetfeld 4a gleicher Richtung ersetzt. Dazu muß der Wirbelstrom 4 in der Daraufsicht gegen den Uhrzeigersinn kreisen. Entsprechendes gilt für den Bereich vor einem Nordpol, bzw. für die Bereiche vor und hinter einem Südpol eines Magneten 2. Vor dem ersten bzw. nach dem letzten Magnet 2 bildet sich ein schwächerer Wirbelstrom 4 aus als zwischen zwei Magneten 2, da die lokalen Änderungen des äußeren Magnetfeldes jeweils nur halb so groß sind. Die Richtungen aller äußeren Magnetfelder 2a, Wirbelströme 4 und inneren Magnetfelder 4a sind den Figuren 1 und 2 zu entnehmen.

Bei einer konstanten Bewegung sind nun auch die Wirbelströme 4 und damit die inneren Magnetfelder 4a konstant, in den Detektorspulen 3 wird keine Spannung induziert. Eine Beschleunigung der Bewegung in Richtung X bewirkt aber eine Änderung der Wirbelströme 4, und damit auch der inneren Magnetfelder 4a. Da die Detektorspulen 3 vom inneren Magnetfeld 4a durchsetzt werden, werden nun der Beschleunigung proportionale Spannungen in den Detektorspulen 3 induziert. Durch Auswertung der Spannungen in einer Folgeelektronik läßt sich die Beschleunigung bestimmen.

Die Detektorspulen 3 erfassen dank ihrer erfindungsgemäßen Anordnung die inneren Magnetfelder 4a besonders gut, da ihre Spulenachsen 3a annähernd Deckungsgleich mit den jeweiligen Rotationsachsen der Wirbelströme 4a liegen. Dies wird erreicht, indem die Detektorspulen 3 wie in Figur 1 gezeigt in einer Reihe mit und jeweils neben den Magneten 2 angeordnet werden. Dabei sollten zunächst die Plätze zwischen zwei Magneten 2 mit Detektorspulen 3 besetzt werden, da hier stärkere innere Magnetfelder 4a wirken und somit bessere Signale aus den einzelnen Detektorspulen 3 gewonnen werden können. Bei Bedarf können aber auch die beiden Positionen vor dem ersten und nach dem letzten Magnet 2 mit Detektorspulen 3 belegt werden. Allgemein liefern Ferraris-Sensoren mit N Magneten 2 maximale Signale mit N+1 Detektorspulen 3. N ist dabei eine ganze Zahl größer oder gleich 1.

Stärkere Ausgangssignale liefern die Detektorspulen 3, wenn ihr Kern mit einem ferromagnetische Material zur Bündelung der inneren magnetischen Felder 4a gefüllt wird. Erfindungsgemäß werden aber Detektorspulen 3 ohne ferromagnetischen Kern verwendet da diese eine bessere zeitliche Auflösung der Beschleunigung erlauben.

Weiter ist es vorteilhaft, die Magnete 2 und Detektorspulen 3 auf einer ferromagnetischen Trägerstruktur 5 anzuordnen. Durch den erwähnten möglichst kleinen Abstand wird das äußere Magnetfeld 2a besonders wirksam in den Wirbelstromkörper 1 eingeprägt und das innere Magnetfeld 4a zum größten Teil erfaßt. Dies trägt entscheidend zur Signalqualität des Abtastkopfes 6 bei.

Einzelne Magnete 2 können in nicht gezeichneter Weise durch Vorsprünge 5a ersetzt werden, etwa der mittlere Magnet 2 oder alternativ auch die beiden äußeren Magnete 2 aus Figur 1. Der Vorsprung 5a sollte dann aus den oben erwähnten Gründen mit seiner Oberkante mit den Magneten 2 und Detektorspulen 3 abschließen. Die Einsparung eines Magneten 2 führt zu einer Schwächung des äußeren Magnetfeldes 2a und damit letztlich zu schwächeren Signalen.

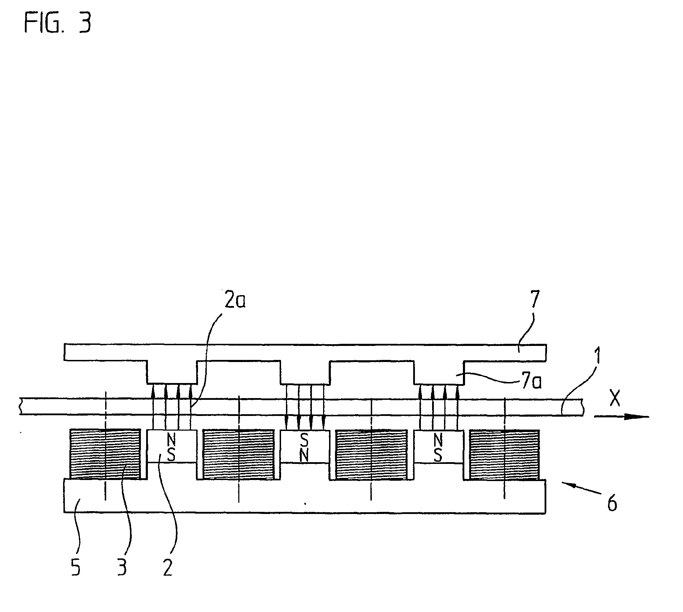

In Figur 3 ist gezeigt, wie sich im Bedarfsfall die Signalqualität des Abtastkopfes 6 weiter erhöhen läßt. Erlaubt es nämlich die jeweilige Anwendung, kann gegenüber des Abtastkopfes 6 eine Gegenstruktur 7 aus ferromagnetischem Material etwa in Form einer Platte angebracht werden. Vorteilhaft können auch Vorsprünge 7a vorgesehen werden, die den Magneten 2 gegenüberliegen und damit das äußere Magnetfeld 2a gezielt bündeln, oder sogar weitere Magnete 2 statt lediglich der Vorsprünge 7a zum Einsatz kommen, die das äußere Magnetfeld 2a verstärken. Im Extremfall kann als Gegenstruktur 7 ein zweiter Abtastkopf 6 eingesetzt werden, inklusive der Detektorspulen 3. Dabei ist natürlich darauf zu achten, daß sich bei gegenüberliegenden Magneten 2 jeweils unterschiedliche Pole gegenüberliegen. Ein magnetischer Schluß zwischen Abtastkopf 6 und Gegenstruktur 7 ist aber nicht notwendig, die konstruktive Ausführung des Ferraris-Sensors kann in dieser Hinsicht völlig frei erfolgen.

Bei der Herstellung von nach dieser Erfindung arbeitenden Beschleunigungsmessern mit Ferraris-Sensoren ist vorteilhaft, daß die Gegenstruktur 7 je nach Anwendungsfall in einer Art Baukastensystem ausgewählt werden kann, wenn sie zwar jeweils gleiche äußere Form aufweist, aber unterschiedliche Zusammensetzungen aufweist: eine Gegenstruktur 7 aus ferromagnetischem Material mit Vorsprüngen 7a bringt bessere Signale als ein Beschleunigungsmesser ohne Gegenstruktur, wird aber übertroffen von einer Gegenstruktur 7 mit Magneten 2.

Abtastköpfe 6 der beschriebenen Art eignen sich in der in den Figuren 1-3 gezeichneten gestreckten Version besonders als Sensoren für lineare Bewegungen. Bei einer Anordnung der Magnete 2 und Detektorspulen 3 auf Kreissegmenten wird die Erfassung von entsprechenden rotatorischen Bewegungen verbessert.

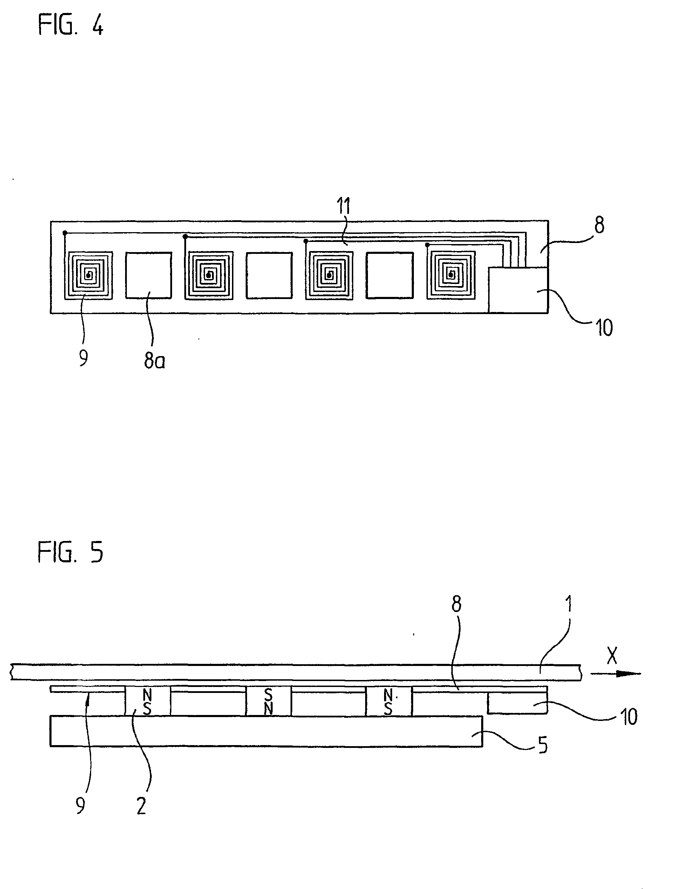

Die erfindungsgemäße Ausbildung der Detektorspulen 3 soll im Folgenden beschrieben werden. Der Zusammenbau und die Verschaltung der oben erwähnten Detektorspulen 3 kann wegen der verwendeten kleinen Drahtdurchmesser Probleme bereiten. Einfacher ist es, die Detektorspulen 3 wie in Figur 4 gezeigt als spiralförmige Leiterbahnen 9 auf einer Leiterplatte 8 mit einer gedruckten Schaltung zu realisieren. Um hohe Windungszahlen zu erreichen, können auch mehrlagige Leiterplatten 8 Anwendung finden, deren Windungen zwischen den Lagen verbunden werden. Die Leiterplatte 8 weist Öffnungen 8a zur Aufnahme von Magneten 2 auf. Dabei werden wie in Figur 5 gezeigt die Magnete 2 so in die Öffnungen 8a der Leiterplatte 8 geklebt, daß deren Oberfläche bündig mit der Oberfläche der Magnete 2 abschließt. Dies erlaubt wiederum den Anbau des Abtastkopfes 6 mit minimalem Abstand der Detektorspulen 3 (hier der spiralförmigen Leiterbahnen 9) und Magneten 2 vom Wirbelstromkörper 1. Auf der Rückseite dieses Abtastkopfes 6 mit Detektorspulen 3 tragender Leiterplatte 8 kann wiederum eine ferromagnetische Trägerstruktur 5 zur Bündelung der Magnetfelder vorgesehen werden. hen werden.

In dieser Ausbildung kann auch die Verschaltung der Detektorspulen 3 unter-einander (in allen bisher beschriebenen Varianten etwa zur Bildung eines differentiellen Signales nützlich, um von äußeren Störfeldern unabhängig zu werden) durch Leiterbahnen 11 auf der Leiterplatte 8 realisiert werden. Es ist sogar möglich, die zur Auswertung der Signale der Detektorspulen 3 nötige Folgeelektronik 10 ganz oder teilweise auf der Leiterplatte 8 unterzubringen.

Es ist für den Fachmann klar, daß die Idee, die Detektorspulen 3 als spiralförmige Leiterbahnen 9 auszubilden, auch in anderen Anordnungen als den hier beschriebenen in einem Ferraris-Sensors Anwendung finden kann.

## Patentansprüche

1. Ferraris-Sensor zur Beschleunigungsmessung mit einem flächigen Wirbelstromkörper (1) und einem auf einer Seite des Wirbelstromkörpers (1) angeordneten Abtastkopf (6), der mindestens einen Magneten (2) zur Erzeugung eines äußeren Magnetfeldes (2a) annähernd senkrecht zu einer Oberfläche (1a) des Wirbelstromkörpers (1), sowie mindestens eine Detektorspule (3) mit einer Achse (3a) zur Detektion der Änderungen eines durch Beschleunigung des Wirbelstromkörpers (1) veränderten, durch Wirbelströmen (4) hervorgerufenen inneren Magnetfeldes (4a) aufweist, wobei die Achsen (3a) der Detektorspulen (3) annähernd senkrecht zur Oberfläche (1a) stehen und die Magnete (2) und Detektorspulen (3) abwechselnd in einer Richtung (X) der zu messenden Beschleunigung nebeneinander angeordnet sind, **dadurch gekennzeichnet, daß** die Detektorspulen (3) auf einer Leiterplatte (8) als spiralförmige Leiterbahnen (9) ausgebildet sind, und daß die Leiterplatte (8) Öffnungen (8a) zur Aufnahme der Magnete (2) aufweist.

2. Ferraris-Sensor nach Anspruch 1, wobei zwischen N+1 in Richtung (X) der zu messenden Beschleunigung aufgereihten Detektorspulen (3) N Magnete (2) mit abwechselnder Polarität angeordnet sind.

3. Ferraris-Sensor nach einem der vorhergehenden Ansprüche, wobei die Magnete (2) und Detektorspulen (3) auf einer ferromagnetischen Trägerstruktur (5) angeordnet sind.

4. Ferraris-Sensor nach Anspruch 3, wobei die ferromagnetische Träger struktur (5) Vorsprünge (5a) aufweist, auf denen die Magnete (2) angeordnet sind.

5. Ferraris-Sensor nach einem der vorhergehenden Ansprüche, wobei dem Abtastkopf (6) gegenüber eine ferromagnetische Gegenstruktur (7) angeordnet ist, so daß sich der Wirbelstromkörper (1) zwischen Abtastkopf (6) und Gegenstruktur (7) befindet.

6. Ferraris-Sensor nach Anspruch 5, wobei die Gegenstruktur (7) Vorsprünge (7a) zur Bündelung des äußeren Magnetfeldes (2a) aufweist.

7. Ferraris-Sensor nach Anspruch 5 oder 6, wobei die Gegenstruktur (7) wenigstens einen weiteren Magnet (2) zur Verstärkung des äußeren Magnetfeldes (2a) aufweist.

8. Ferraris-Sensor nach einem der Ansprüche 5-7, wobei die Gegenstruktur (7) wenigstens eine weitere Detektorspule (3) aufweist.

9. Ferraris-Sensor nach Anspruch 8, wobei die Gegenstruktur (7) ein weiterer Abtastkopf (6) ist.

10. Ferraris-Sensor nach einem der vorhergehenden Ansprüche, wobei die Leiterplatte (8) mehrlagig aufgebaut ist, und spiralförmige Leiterbahnen (9) über mehrere Lagen miteinander zu Detektorspulen (3) verschaltet sind.

11. Ferraris-Sensor nach einem der vorhergehenden Ansprüche, wobei die Verbindung der Detektorspulen (3) untereinander und mit einer Folgeelektronik (10) über Leiterbahnen (11) der Leiterplatte (8) erfolgt.

12. Ferraris-Sensor nach einem der vorhergehenden Ansprüche, wobei die Folgeelektronik (10) zumindest teilweise auf der Leiterplatte (8) angeordnet ist.

## Claims

1. A Ferraris sensor for measuring acceleration with a flat eddy current body (1) and with a scanning head (6) arranged on one side of the eddy current body (1), which scanning head (6) has at least one magnet (2) for generating an exterior magnetic field (2a) approximately perpendicular to a surface (1a) of the eddy current body (1) , and at least one detector coil (3) with an axis (3a) for the detection of the changes of an interior magnetic field (4a) which is changed by acceleration of the eddy current body (1), brought about by eddy currents (4), wherein the axes (3a) of the detector coils (3) are approximately perpendicular to the surface (1a) and the magnets (2) and detector coils (3) are arranged alternately adjacent to each other in a direction (X) of the acceleration which is to be measured, **characterized in that** the detector coils (3) are embodied as helical strip conductors (9) on a printed circuit board (8), and that the printed circuit board (8) has openings (8a) to receive the magnets (2).

2. The Ferraris sensor according to Claim 1, in which N magnets (2) are arranged with alternating polarity between N+1 detector coils (3) lined up in the direction (X) of the acceleration which is to be measured.

3. The Ferraris sensor according to any of the preceding claims, in which the magnets (2) and detector coils (3) are arranged on a ferromagnetic support structure (5).

4. The Ferraris sensor according to Claim 3, in which the ferromagnetic support structure (5) has protrusions (5a) on which the magnets (2) are arranged.

5. The Ferraris sensor according to any of the preceding claims, in which a ferromagnetic counter-structure (7) is arranged opposite the scanning head (6), so that the eddy current body (1) is situated between the scanning head (6) and the counter-structure (7).

6. The Ferraris sensor according to Claim 5, in which the counter-structure (7) has protrusions (7a) for focussing the exterior magnetic field (2a).

7. The Ferraris sensor according to Claim 5 or 6, in which the counter-structure (7) has at least one further magnet (2) to strengthen the exterior magnetic field (2a).

8. The Ferraris sensor according to any of Claims 5 - 7, in which the counter-structure (7) has at least one further detector coil (3).

9. The Ferraris sensor according to Claim 8, in which the counter-structure (7) is a further scanning head (6).

10. The Ferraris sensor according to any of the preceding claims, in which printed circuit board (8) is embodied to have several layers, and helical strip conductors (9) are connected together over several layers to form detector coils (3).

11. The Ferraris sensor according to any of the preceding claims, in which the connection of the detector coils (3) with each other and with an electronic follow-up device (10) takes place via strip conductors (11) of the printed circuit board (8).

12. The Ferraris sensor according to any of the preceding claims, in which the electronic follow-up device (10) is arranged at least partially on the printed circuit board (8).

## Revendications

1. Capteur pour Ferrari pour mesurer une accélération, comportant un corps à courant de Foucault (1) plat et une tête de balayage (6) disposée sur un côté du corps à courant de Foucault, laquelle présente au moins un aimant (2) pour générer un champ magnétique extérieur (2a) approximativement perpendiculaire à une surface (1a) du corps à courant de Foucault (1) ainsi que au moins une bobine de détecteur (3) avec un axe (3a) pour détecter les variations du champ magnétique intérieur (4a) provoquées par des courants de Foucault (4), variées par l'accélération du corps à courant de Foucault (1), moyennant quoi les axes (3a) des bobines de détecteur (3) sont situés approximativement perpendiculairement à la surface (1a) et les aimants (2) et les bobines de détecteur (3) sont disposés côte à côte en alternance dans une direction (X) de l'accélération à mesurer, **caractérisé en ce que** les bobines de détecteur (3) sont réalisées sur une carte de circuit imprimé (8) comme des pistes conductrices (9) en spirales et **en ce que** la carte de circuit imprimé (8) présente des ouvertures (8a) pour recevoir les aimants(2).

2. Capteur pour Ferrari selon la revendication 1, moyennant quoi N aimants (2) sont disposés avec une alternance de polarité entre N+1 bobines de détecteur (3) alignées dans la direction (X) de l'accélération à mesurer.

3. Capteur pour Ferrari selon une des revendications précédentes, moyennant quoi les aimants (2) et les bobines de détecteur (3) sont disposés sur une structure porteuse (5) ferromagnétique.

4. Capteur pour Ferrari selon la revendication 3, moyennant quoi la structure porteuse ferromagnétique (5) présente des protubérances (5a), sur lesquelles sont disposés les aimants (2).

5. Capteur pour Ferrai selon une des revendications précédentes, moyennant quoi une contre-structure (7) ferromagnétique est disposée en vis-à-vis de la tête de balayage (6), de telle sorte que le corps à courant de Foucault (1) se trouve entre la tête de balayage (6) et la contre-structure (7).

6. Capteur pour Ferrari selon la revendication 5, moyennant quoi la contre-structure (7) présente des protubérances (7a) pour la collimation du champ magnétique extérieur (2a).

7. Capteur pour Ferrari selon la revendication 5 ou 6, moyennant quoi la contre-structure (7) présente au moins un aimant (2) supplémentaire pour le renforcement du champ magnétique extérieur (2a).

8. Capteur pour Ferrari selon une des revendications 5 à 7, moyennant quoi la contre-structure (7) présente au moins une bobine de détecteur (3) supplémentaire.

9. Capteur pour Ferrai selon la revendication 8, moyennant quoi la contre-structure (7) est une tête de balayage (6) supplémentaire.

10. Capteur pour Ferrari selon une des revendications précédentes, moyennant quoi la carte de circuit imprimé (8) est configurée en plusieurs couches, et des pistes conductrices en spirales (9) sont connectées les unes aux autres aux bobines de détecteur (3) par l'intermédiaire de plusieurs couches.

11. Capteur pour Ferrari selon une des revendications précédentes, moyennant quoi la liaison des bobines de détecteur (3) les unes sous les autres et avec une électronique en aval (10) s'effectue par l'intermédiaire des pistes conductrices (11) de la carte de circuit imprimé (8).

12. Capteur pour Ferrari selon une des revendications précédentes, moyennant quoi l'électronique en aval (10) est disposée au moins partiellement sur la carte de circuit imprimé (8).
